# EUROPÄISCHE PATENTANMELDUNG

(11) **EP 1 519 287 A1**
(43) Veröffentlichungstag der Anmeldung: **30.03.2005**
(21) Anmeldenummer: 03021536.2
(22) Anmeldetag: 24.09.2003
(51) Int. Cl.: G06F 17/60, H04L 12/58

(54) **Verfahren zur nachweisbaren Zustellung einer Email-Nachricht**

(71) Anmelder: Racic, Alex, 82049 Pullach (DE)
(72) Erfinder: Racic, Alex, 82049 Pullach (DE)
(74) Vertreter: Körner, Ekkehard, Dipl.-Ing.

(57) **Zusammenfassung**

Das erfindungsgemäße Verfahren zur nachweisbaren Zustellung einer Email-Nachricht (3) erfaßt (A) und speichert (B) Nachrichtendaten einschließlich des Nachrichteninhalts (4) einer Email-Nachricht (3) auf einem zentralen Rechnersystem (1), erstellt und versendet (C) eine Benachrichtigung über das Vorliegen der Email-Nachricht (3) an den Empfänger (6), liest, durch Zugriff seitens des Empfängers (6) auf die auf dem zentralen Rechnersystem (1) befindliche Email-Nachricht (3) hervorgerufen (E), zumindest einen Teil der gespeicherten Nachrichtendaten (5) einschließlich des Nachrichteninhalts (4) auf dem zentralen Rechnersystem (1) aus, erzeugt und stellt einen Email-Rückschein auf dem zentralen Rechnersystem (1) bereit (F, G), der die ausgelesenen Nachrichtendaten einschließlich des Nachrichteninhalts (4) aufweist, und stellt die Email-Nachricht (3) für den Empfänger (6) bereit.

## Beschreibung

Die vorliegende Erfindung betrifft ein Verfahren zur nachweisbaren Zustellung einer Email-Nachricht mittels eines zentralen, unabhängigen Rechnersystems.

In der Kommunikation mittels elektronisch verschickter Nachrichten (Email) kann eine gesicherte Zustellung, wie in herkömmlichen materiellen Brief- oder Paketzustellungsverfahren bspw. über ein Einschreiben mit Rückschein, bisher nicht erfolgen.

Bei üblicherweise verwendeten Email-Programmen des Standes der Technik wie etwa "Outlook" der Firma Microsoft läßt sich eine Option einstellen, wonach ein Absender einer Email vom Empfänger eine kurze Empfangsbestätigung ohne Anzeige des Nachrichteninhalts anfordern kann. Der Empfänger ist jedoch in der Lage, individuell bei jeder eingehenden Email per Klick zu entscheiden, ob dem Absender besagte Empfangsbestätigung zugesendet werden soll oder nicht. Somit ist kein sicherer Nachweis über den Erhalt der Email-Nachricht gewährleistet.

Für eine transparente, gesicherte, nachweisbare elektronische Kommunikation ist es notwendig, daß der versendete Nachrichteninhalt weder vom Absender noch vom Empfänger nachträglich verändert werden kann und daß dem Absender ein vollwertiger Email-Rückschein angezeigt wird.

Daher liegt der vorliegenden Erfindung die Aufgabe zugrunde, ein Verfahren zur nachweisbaren Zustellung von Email-Nachrichten zu schaffen, wobei der unmanipulierbare Nachrichteninhalt in der dem Absender bereitgestellten Lesebestätigung, dem Email-Rückschein, angezeigt wird, und das für sämtliche verwendeten Email-Programme funktioniert.

Diese Aufgabe wird durch die Merkmale des Anspruchs 1 gelöst.

Das erfindungsgemäße Verfahren zur nachweisbaren Zustellung einer Email-Nachricht erfaßt und speichert Nachrichtendaten einschließlich des Nachrichteninhalts einer Email-Nachricht auf einem zentralen Rechnersystem, erstellt und versendet eine Benachrichtigung über das Vorliegen der Email-Nachricht an den Empfänger, liest, durch Zugriff seitens des Empfängers auf die auf dem zentralen Rechnersystem befindliche Email-Nachricht hervorgerufen, zumindest einen Teil der gespeicherten Nachrichtendaten einschließlich des Nachrichteninhalts auf dem zentralen Rechnersystem aus, erzeugt und stellt einen Email-Rückschein auf dem zentralen Rechnersystem bereit, der die ausgelesenen Nachrichtendaten einschließlich des Nachrichteninhalts aufweist, und stellt die Email-Nachricht für den Empfänger bereit. Hierdurch wird ein sicherer Nachweis für den Absender ermöglicht, daß diese Email-Nachricht an den Empfänger zugestellt wurde, sobald dem Empfänger die Nachricht angezeigt wird.

Um den Absender so bald wie möglich über die erfolgte Zustellung der Email-Nachricht zu informieren, wird der Email-Rückschein vorteilhafterweise an das elektronische Postfach des Absenders versendet.

Vorteilhafterweise wird direkt nach dem Erstellen und Versenden der Benachrichtigung durch das zentrale Rechnersystem von diesem eine Sendebestätigung für den Absender bereitgestellt, die Nachrichtendaten einschließlich des Nachrichteninhalts der Email enthält. Damit dem Absender über das Versenden der Email-Nachricht baldmöglichst ein erster Nachweis vorliegt, wird die Sendebestätigung unmittelbar nach Erstellung an das elektronische Postfach des Absenders übermittelt.

Damit der Empfänger die für ihn bestimmte Nachricht ohne sein Zutun sofort nach Erhalt angezeigt bekommt, wird vorteilhafterweise in der an den Empfänger versendeten Benachrichtigung über das Vorliegen einer Email-Nachricht die Email-Nachricht selbst automatisch angezeigt, sofern der Empfänger online mit dem Internet verbunden ist und sein Email-Programm Nachrichten im HTML-Format anzeigen kann.

Um den detaillierten Ablauf der einzelnen Verfahrensschritte vor dem Empfänger zu verbergen, kann die Verarbeitung zumindest eines Teils der Verfahrensschritte vorteilhafterweise durch einen der Email-Nachricht hinzugefügten geeigneten Programmiercode erfolgen.

Die Speicherung der Nachrichtendaten und des Nachrichteninhalts zum späteren Abruf der Email-Nachricht durch den Empfänger erfolgt in besonders vorteilhafter Weise in mindestens einer Datei, die lediglich den Nachrichteninhalt enthält. Dies führt zu einer Reduktion der Verarbeitungszeit auf dem zentralen Rechnersystem insbesondere beim Erstellen des Email-Rückscheins für den Absender. Zudem ist bei der Speicherung der Nachrichtendaten sichergestellt, daß die Email-Nachricht zu keinem Zeitpunkt vom Absender oder vom Empfänger manipuliert werden kann.

Um die Anzeige der Email-Nachricht beim Empfänger zu kontrollieren und diese Daten für eine spätere Aufbereitung zu erfassen, ist der Email-Nachricht vorteilhafterweise ein geeigneter Programmiercode hinzugefügt.

Die Speicherung der relevanten Nachrichtendaten nach jeder Anzeige der Email-Nachricht beim Empfänger erfolgt vorzugsweise in einer Protokolldatei auf dem zentralen Rechnersystem.

Selbstverständlich kann die vom Absender verfaßte Email-Nachricht Anlagen enthalten, die wie die Email-Nachricht vorteilhafterweise ebenfalls sicher auf dem zentralen Rechnersystem für den Empfänger bereitgestellt werden. Der Zugriff auf diese Anlagen löst in gleicher Weise wie der Zugriff auf die Email-Nachricht die Erzeugung und das Bereitstellen einer Anlagenempfangsbestätigung für den Absender aus.

Weitere Einzelheiten, Merkmale und Vorteile der vorliegenden Erfindung ergeben sich aus der nachfolgenden Beschreibung unter Bezugnahme auf die Zeichnung.

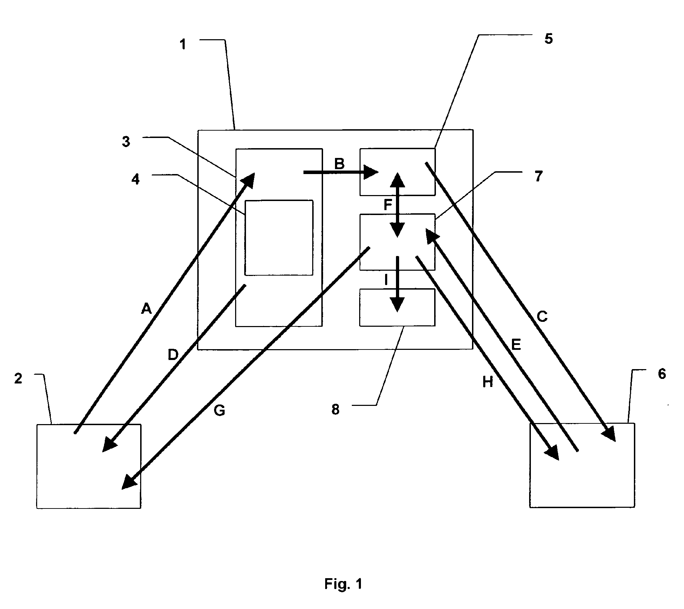

Fig. 1 ist eine schematische Darstellung des Verfahrens zur nachweisbaren Zustellung einer Email-Nachricht.

Darin ist eine bevorzugte Ausführungsform des Verfahrens zur nachweisbaren Zustellung einer Email-Nachricht schematisch dargestellt. Auf einem zentralen Rechnersystem 1 verfaßt der Absender 2, beispielsweise mittels eines Browsers eine Email-Nachricht 3. Die Email-Nachricht 3 weist zumindest die Email-Adresse des Absenders 2, die Email-Adresse mindestens eines Empfängers 6, einen Betreff sowie den Nachrichteninhalt 4 auf. Selbstverständlich ist die Email-Nachricht 3 nicht auf diese Inhalte beschränkt. Zusätzlich können Dateien als Anlagen verschickt werden. Der Absender 2 schließt den mit dem Pfeil A gekennzeichneten Verfahrensschritt ab, indem er das Absenden der Email-Nachricht 3 anstößt, wobei sicherzustellen ist, daß er zu diesem Zeitpunkt online mit dem Internet verbunden ist.

Auf dem zentralen Rechnersystem 1 wird die vom Absender 2 verfaßte Email-Nachricht 3 in mindestens einer Datei als gespeicherte Nachrichtendaten 5 abgespeichert. Die gespeicherten Nachrichtendaten 5 können neben der Email-Nachricht 3 zusätzlich geeignete Daten wie Datum und Uhrzeit der Erfassung der Email-Nachricht 3 aufweisen, wobei die besagten gespeicherten Nachrichtendaten 5 in später ablaufenden Verfahrensschritten um zusätzliche Daten erweitert werden können. Der Verfahrensschritt des Abspeicherns ist als Pfeil B dargestellt. Besonders vorteilhaft ist es, wenn der Nachrichteninhalt 4 zusätzlich gesondert als Text- und/oder als HTML-Datei abgespeichert wird. Das erleichtert die spätere Erstellung des Rückscheins erheblich. Die Speicherung erfolgt derart, daß eine nachträgliche Manipulation der Email-Nachricht 3 oder der mitgesendeten Anlage(n) weder von Seiten des Absenders 2 noch des Empfängers 6 möglich ist. Ein Zugriff auf die gespeicherten Nachrichtendaten 5 auf dem zentralen Rechnersystem 1 von außen, insbesondere durch Scan-Verfahren, die einen Dateinamen nach dem Zufallsprinzip ermitteln, wird vorteilhafterweise durch Hinzufügen von geeigneten Befehlen zum Beenden eines Ladevorgangs an den Anfang jeder Datei sicher verhindert.

Der Empfänger 6 erhält dann vom zentralen Rechnersystem 1 eine Benachrichtigung über das Vorliegen einer Email-Nachricht 3. Diese Benachrichtigung weist neben den Nachrichtendaten wie Email-Adresse des Absenders 2, Absendezeitpunkt, Email-Adresse des Empfängers 6 und dem Betreff als Inhalt einen Hinweis auf, daß für den Empfänger 6 eine Email-Nachricht 3 auf einem zentralen Rechnersystem 1 vorliegt und entsprechend über einen ebenfalls enthaltenen Hyperlink bzw. dessen textuelle Darstellung abgerufen werden kann. Die Benachrichtigung wird an das elektronische Postfach des Empfängers 6 versendet. Dieser Verfahrensschritt ist mit dem Pfeil C dargestellt.

Im Anschluß daran wird optional eine Sendebestätigung, die die Email-Nachricht 3 einschließlich des Nachrichteninhalts 4 sowie den Zeitpunkt des Versendens der Benachrichtigung an den Empfänger 6 enthält, vom zentralen Rechnersystem 1 an den Absender 2 versendet. Diese Sendebestätigung bestätigt dem Absender 2 das Versenden der Benachrichtigung an den Empfänger 6 und ist so markiert, daß später ein eindeutiger Bezug zum Email-Rückschein hergestellt werden kann. Das Versenden der Sendebestätigung an den Absender 2 ist mit Pfeil D gekennzeichnet.

Der Empfänger 6 greift in seinem Email-Programm auf die in seinem elektronischen Postfach befindliche Benachrichtigung über das Vorliegen der Email-Nachricht 3 zu. Dieser Verfahrensschritt ist mit dem Pfeil E gekennzeichnet.

Hinsichtlich der detaillierten Ausführungsbeschreibung der folgenden Verfahrensschritte werden, je nach der dem Empfänger 6 zur Verfügung stehenden technischen Umgebung, zwei Fälle unterschieden, die im folgenden geschildert werden und auf die sich die daran anschließende Beschreibung bezieht. Im ersten, häufigsten Fall (i) ist der Empfänger 6 online mit dem Internet verbunden und verfügt über ein Email-Programm, das Email-Nachrichten im HTML-Format darstellen kann. Der zweite Fall (ii) sieht vor, daß der Empfänger 6 entweder online mit dem Internet verbunden ist, jedoch nicht über ein Email-Programm verfügt, das Email-Nachrichten im HTML-Format darstellen kann, oder noch nicht mit dem Internet verbunden ist.

Der Zugriff auf die Email-Nachricht 3 durch den Empfänger 6 erfolgt im Fall (i) vorzugsweise automatisch. In der Benachrichtigung über das Vorliegen der Email-Nachricht 3 befindet sich, in der Sprache HTML dargestellt, eine Funktion, die auf einen Programmiercode 7 im zentralen Rechnersystem 1 zugreift. In der hier beschriebenen Ausführungsform wird der Programmiercode 7 von einem geeigneten Skriptsprachenprozessor verarbeitet. Besagte Funktion wird sofort nach Öffnen der Benachrichtigung in einem HTML-fähigen Email-Programm ausgeführt, wobei die Verarbeitung beispielsweise analog zu einem Aufruf erfolgt, der eine Bilddatei nachträglich von einem Serverrechner lädt und darstellt.

Im Fall (ii) erfolgt der Zugriff auf die auf dem zentralen Rechnersystem 1 gespeicherte Email-Nachricht 3 nicht automatisch, sondern manuell. Der Empfänger 6 klickt auf den oben bereits erwähnten Hyperlink in der Benachrichtigung über das Vorliegen einer Email-Nachricht 3 und löst damit die auf dem zentralen Rechnersystem 1 liegende Funktion aus, sofern er online mit dem Internet verbunden ist. Der Zugriff ist für beide Fälle (i) und (ii) als Verfahrensschritt mit dem Pfeil E dargestellt.

Der Programmiercode 7 führt auf dem zentralen Rechnersystem 1 auf diesen Anstoß hin ein Abspeichern des Zugriffszeitpunkts auf die Email-Nachricht 3 und das Auslesen geeigneter Daten einschließlich des Nachrichteninhalts 4 aus den gespeicherten Nachrichtendaten 5 durch. Aufgrund der hohen Anforderungen hinsichtlich Sicherheit und Nachweisbarkeit ist die Funktion des Auslesens innerhalb des Programmiercodes 7 mit einer erhöhten Komplexität behaftet Besonders aufwendig gestaltet sich das Auslesen des Nachrichteninhalts 4 für Zwecke der Erstellung des Rückscheins. Dies kann auf zwei unterschiedliche Weisen durchgeführt werden, einerseits durch das Herausfiltern des Nachrichteninhalts 4 aus der Email-Nachricht 3 selbst, andererseits durch dedizierten Zugriff auf die in den Nachrichtendaten 5 zusätzlich gespeicherten und nur den Nachrichteninhalt 4 aufweisenden Dateien. Letztere Vorgehensweise ist aufgrund einer höheren Verarbeitungsgeschwindigkeit zu bevorzugen. Dieser Verfahrensschritt ist mit dem Doppelpfeil F gekennzeichnet.

Im Anschluß daran wird, veranlaßt vom Programmiercode 7, der Email-Rückschein für den Absender 2 aus den gespeicherten Nachrichtendaten erstellt und an das elektronische Postfach des Absenders 2 verschickt, dargestellt durch den Pfeil G. Der Email-Rückschein kann außer dem Nachrichteninhalt 4 und anderen Informationen, die den gespeicherten Nachrichtendaten 5 zu entnehmen sind (Betreff, Sendezeit, Email-Adressen und Namen), auch weitere Informationen aufweisen, die erst durch Interaktion zwischen dem zentralen Rechnersystem 1 bzw. dem Programmiercode 7 und dem Empfänger 6 ermittelt werden können. Darunter fallen beispielsweise die Internet-Zugangsdaten (IP-Nummer) des Empfängers 6 sowie Zugriffszeit und -datum. Selbstverständlich ist der Email-Rückschein nicht auf diese Informationen beschränkt. Danach wird die Email-Nachricht 3 vom zentralen Rechnersystem 1 auf das Email-Programm bzw. den Browser des Empfängers 6 übertragen und dort im HTML-Format in geeigneter Darstellung angezeigt, gekennzeichnet durch den Pfeil H.

Die Verfahrensschritte E bis H erfolgen in einer für Datenübertragungsverhältnisse im Internet sehr schnellen Geschwindigkeit, so daß der Empfänger 6 im Fall (i) die automatische Anzeige der Email-Nachricht 3 einschließlich des Nachrichteninhalts 4 in seinem Email-Programm nicht als zeitlich verschoben empfindet.

Vorteilhafterweise wird nach Übermittlung der Email-Nachricht 3 zur Anzeige beim Empfänger 6 der Zugriff als Protokolldaten 8 geeignet auf dem zentralen Rechnersystem 1 abgelegt. Dieser Verfahrensschritt ist mit dem Pfeil I gekennzeichnet. Die Protokolldaten 8 sind für den Absender 2 beispielsweise zu Beweis- oder Statistikzwecken einsehbar.

Für die optional mit der Email-Nachricht 3 vom Absender 2 für den Empfänger 6 versendeten Anlagen sieht das erfindungsgemäße Verfahren eine Verarbeitung in gleicher Weise vor. Insbesondere wird vorteilhafterweise eine eigene Anlagenempfangsbestätigung für den Absender 2 erzeugt und bereitgestellt. Die detaillierte Vorgehensweise orientiert sich hierbei an den bereits zuvor beschriebenen Verfahrensschritten E bis H. Bei Zugriff auf eine mit Schritt B in den gespeicherten Nachrichtendaten 5 gesicherte Anlage durch den Empfänger 6 veranlaßt der Programmiercode 7 das Auslesen und Bereitstellen der Anlage. Die Zugriffsdaten wie der Zugriffszeitpunkt, die betreffende Email-Nachricht 3 und die Anlagendaten werden vom Programmiercode 7 erfaßt und bilden den Inhalt der Anlagenempfangsbestätigung, die für den Absender 2 bereitgestellt und an dessen elektronisches Postfach übermittelt wird. Im Anschluß daran startet entweder das reine Abspeichern der Anlage oder die automatische Anzeige der Anlage auf dem Rechner des Empfängers 6, falls eine automatische Anzeige von Anlagen vom Browser des Empfängers 6 unterstützt wird.

Es ist auch denkbar, daß der Absender 2 die Email-Nachricht 3 auf seinem eigenen Rechner erstellt und diese in einem geeigneten Format zur Weiterleitung an das zentrale Rechnersystem 1 verschickt. Das zentrale Rechnersystem 1 liest dann aus dieser Nachricht Nachrichtendaten einschließlich des Nachrichteninhalts 4 aus und verarbeitet sie nach den oben beschriebenen Verfahrensschritten weiter.

Das erfindungsgemäße Verfahren zur nachweisbaren Zustellung einer Email-Nachricht 3 muß, wie bereits erwähnt, hohen Anforderungen bzgl. Sicherheit und Nachweisbarkeit genügen. Durch geeignete Ausführung des Programmiercodes 7 und durch Beschreiben bzw. Auslesen geeigneter Protokolldateien ist bei einem Absturz des zentralen Rechnersystems 1 oder bei einem Ausfall des Skriptsprachenprozessors sichergestellt, daß der Email-Rückschein für den Absender 2 tatsächlich nur dann erzeugt wird, wenn die Email-Nachricht 3 einschließlich Nachrichteninhalt 4 beim Empfänger 6 angezeigt wurde, und daß die Email-Nachricht 3 beim Empfänger 6 gar nicht angezeigt werden kann, ohne daß der Absender 2 dafür eine Bestätigung erhält.

## Patentansprüche

1. Verfahren zur nachweisbaren Zustellung einer Email-Nachricht (3) mittels eines zentralen, unabhängigen Rechnersystems (1) mit folgenden Schritten:
- Erfassen (A) und Speichern (B) von Nachrichtendaten einschließlich dem Nachrichteninhalt (4) einer Email-Nachricht (3) auf dem zentralen Rechnersystem (1);
- Erstellen und Versenden (C) einer Benachrichtigung über das Vorliegen der Email-Nachricht (3) an den Empfänger (6);
- durch Zugriff (E) seitens des Empfängers (6) auf die auf dem zentralen Rechnersystem (1) befindliche Email-Nachricht (3) hervorgerufenes Auslesen (F) zumindest eines Teils der gespeicherten Nachrichtendaten (5) einschließlich des Nachrichteninhalts (4) auf dem zentralen Rechnersystem (1);
- Erzeugen und Bereitstellen (G) eines Email-Rückscheins auf dem zentralen Rechnersystem (1), der die ausgelesenen Nachrichtendaten einschließlich des Nachrichteninhalts (4) aufweist;
- Bereitstellen der Email-Nachricht (3) für den Empfänger (6).

2. Verfahren nach Anspruch 1, wobei der Email-Rückschein an den Absender (2) versendet wird (H).

3. Verfahren nach Anspruch 1 oder 2, wobei nach dem Versenden der Benachrichtigung (C) durch das zentrale Rechnersystem (1) von diesem eine Sendebestätigung für den Absender (2) bereitgestellt wird, die Nachrichtendaten einschließlich des Nachrichteninhalts (4) aufweist.

4. Verfahren nach Anspruch 3, wobei die Sendebestätigung an den Absender (2) versendet wird (D).

5. Verfahren nach einem der vorangehenden Ansprüche, wobei in der an den Empfänger (6) versendeten Benachrichtigung über das Vorliegen einer Email-Nachricht (3) die Email-Nachricht (3) selbst automatisch angezeigt wird, sofern der Empfänger (6) online mit dem Internet verbunden ist und das Email-Programm Nachrichten im HTML-Format anzeigen kann.

6. Verfahren nach einem der vorangehenden Ansprüche, wobei die Verarbeitung zumindest eines Teils der Verfahrensschritte durch einen der Email-Nachricht (3) hinzugefügten geeigneten Programmiercode (7) erfolgt.

7. Verfahren nach einem der vorangehenden Ansprüche, wobei die gespeicherten Nachrichtendaten (5) mindestens eine Datei aufweisen, die lediglich den Nachrichteninhalt (4) enthält.

8. Verfahren nach einem der vorangehenden Ansprüche, wobei ein zur Email-Nachricht (3) hinzugefügter Programmiercode dazu geeignet ist, die Anzeige der Email-Nachricht (3) beim Empfänger (6) zu kontrollieren.

9. Verfahren nach einem der vorangehenden Ansprüche, wobei nach Anzeige der Email-Nachricht (3) beim Empfänger (6) Protokolldaten (8) mit relevanten Nachrichtendaten auf dem zentralen Rechnersystem (1) gespeichert werden.

10. Verfahren nach einem der vorangehenden Ansprüche, wobei das Öffnen der mit der Email-Nachricht (3) versendeten Anlagen durch den Empfänger (6) eine weitere Bestätigung für den Absender (2) erzeugt.
